# EUROPEAN PATENT APPLICATION

(11) **EP 2 557 856 A1**
(43) Date of publication of application: **13.02.2013**
(21) Application number: 11360037.3
(22) Date of filing: 10.08.2011
(51) Int. Cl.: H04W 48/16

(54) **Discovering wireless access network nodes**

(71) Applicant: Alcatel Lucent, 75007 Paris (FR)
(72) Inventor: Puddle, Nicola, Swindon Wiltshire SN4 0ND (GB); Brend, Graham, Bath Somerset BA1 7UE (GB); Wong, Shin Horng, Chippenham Wiltshire SN14 0SP (GB)
(74) Representative: Script IP Limited

(57) **Abstract**

A method of discovering wireless access network nodes in a region of a wireless communications network, and user equipment operable to perform that method. The method comprises: receiving an instruction to log wireless access nodes from which a signal is detected; receiving an indication of a predetermined wireless access network node to which results of said logging are to be transmitted; performing and storing results of said logging of wireless access nodes from which a signal is detected; and transmitting said results to said predetermined wireless access network node. Such a method allows more effective collection of neighbour information in a small cell environment, and may help mitigate unnecessary drainage of user equipment power.

## Description

### FIELD OF THE INVENTION

The present invention relates to a method of discovering wireless access network nodes in a region of a wireless communications network, user equipment and a computer program product operable to perform that method.

### BACKGROUND

Wireless telecommunications systems are known. In those known systems, radio coverage is provided to user equipment, for example mobile telephones, by regions of geographical area. A base station is located in each geographical area to provide the required radio coverage. User equipment in the geographical area served by a base station receives information and data from the base station and transmits data and information to the base station.

In a cellular system, radio coverage is provided in areas known as cells. A base station is located in each cell to provide radio coverage. Traditional base stations provide coverage in relatively large geographical areas and the cells are often referred to as "macro cells". It is possible to provide smaller sized cells within a macro cell. Such smaller sized cells are sometimes referred to as micro cells, pico cells or femto cells.

One way to establish a femto cell is to provide a femto cell base station that provides coverage having a relatively limited range within the total coverage area of a macro cell. The transmission power of a small cell, for example, a femto cell, is relatively low and thus each small cell provides a small coverage area compared to that of a traditional macro cell and covering, for example, an office or home.

Small cells are typically provided where the communications coverage provided by a macro cell is poor, or where an end user wishes to use an alternative communications link provided locally by the small cell to communicate with a core network. Such situations may arise where, for example, a user has a pre-existing communication link and wishes to utilise that link in preference to that provided by a macro cell network provider to communicate with a core network.

Small cell base stations may be commissioned such that they are "private access" or "public access". In small cell base station networks configured to provide private access, access is typically restricted to only registered users, for example, family members or particular groups of employees. In small cell deployments which are public access, all users may use the small cell base stations, subject to certain restrictions to protect quality of service received by registered users.

Typical small cell deployments may utilise broadband internet protocol connections as backhaul to connect to a core network.

In macro cell base station deployments, primary scrambling codes are used to distinguish between neighbouring base stations. Typically, there are between 6 and 16 primary scrambling codes (PSCs) that are available for use by small cells, for example, femto cells. The PSC to be used by each femto cell base station is typically selected by an automatic configuration process based on measurements made by that femto cell base station. For example, a femto cell base station may detect from receive signals which PSCs are in use around itself and may select a PSC that has not been detected as being in use; otherwise, a femto base station may select a PSC of the weakest signal received. Consequently, there is typically much PSC re-use, since there are relatively few PSCs to be used by relatively many small cell base stations.

In a typical wireless network many tens of thousands of small cell base stations may be deployed within a network under the control of one network provider which can make the manual provision and planning of a small cell deployment impractical for an operator. Furthermore, a network operator is unable to control directly the location of small cells to help prevent any undue interference or optimize overall operation of the network.

It is thus desirable for small cell base stations to be able to automatically configure themselves, based on their assessment of the environment in which they are deployed. In order to enable efficient handover between small cell base stations and macro base stations in open access and closed access group deployments, and to enable automatic location area identifier allocation between small cell base stations, it is necessary to determine characteristics of neighbouring small cells. Such determination of surrounding wireless access network nodes in a region of a wireless communications network can be difficult in a highly congested and densely arranged small cell deployment.

Accordingly, it is desired to provide an improved technique for determining wireless access network nodes in a region of a wireless communications network.

### SUMMARY

Accordingly, a first aspect provides a method of discovering wireless access network nodes in a region of a wireless communications network, comprising:
receiving an instruction to log wireless access nodes from which a signal is detected;
receiving an indication of a predetermined wireless access network node to which results of the logging are to be transmitted;
performing said logging and storing results of said logging of wireless access nodes from which a signal is detected; and
transmitting the results to the predetermined wireless access network node.

The first aspect recognises that one problem with discovering wireless access network nodes, for example, macro cell base stations or small cell base stations in a region of a wireless communication network can be that generating a neighbour list by direct reception of transmissions (referred to herein as "sniffing") performed by, for example, a small cell base station itself of the neighbouring cells may only identify a subset of all neighbouring small cells. This is because it is not always possible for a wireless access network node to determine which other cells may be accessible from all points within the cell supported by the wireless access network node. Such a situation may arise, for example, when two small base stations are closely adjacent to one another but it is not possible for one to detect the other since there is an obstruction between the two. However, user equipment positioned at particular points within the areas of coverage supported by the small cells may readily be able to identify both small cell base stations. Thus, it can be the case that user equipment may be in a position to need to hand over from one small cell to another, but because a small cell is unaware of a neighbour it is not within its neighbour list and handover therefore becomes difficult. Use of user equipment and the instructing of user equipment to perform automatic neighbour relation (ANR) logging of wireless access network nodes in a region can help to ensure that the neighbour lists of base stations, including small cell base stations, are correctly populated in a way which ensures that operation of the network continues to be efficient.

A typical automatic neighbour relation mechanism is used in relation to macro cell deployments and, in such cases, the automatic neighbour relation (ANR) mechanism relies on a radio network controller (in a UMTS environment) configuring and initiating an ANR logging procedure on a user equipment which is attached to a cell controlled by a base station attached to that RNC. After said user equipment receives an ANR logging configuration message and moves to either idle, cell_PCH or URA_PCH mode it is operable to immediately begin ANR logging. As the user equipment roams within the network, it logs system information broadcast by all cells until either it reaches the maximum number of cells to be logged, or a timer expires. The log produced comprises a list of pairs of serving base stations or serving cells together with other cells (not in the neighbour list) from which a signal was received whilst in that serving or "primary" cell.

Once the user equipment requires to contact the network again, for example, to make a call or to receive a text message, the user equipment which has performed ANR logging provides the ANR log to the next RNC to which it attaches. This can be a different RNC to that which initiated original ANR measurements and, thus, the log information collated by the user equipment is then sent back to the source RNC. In certain circumstances, for example when a user equipment has roamed significantly through a network, the user equipment will have logged information from cells supported by a multiplicity of RNCs and, thus, relevant logs are sent back to a plurality of RNCs.

Whichever RNC receives an ANR log from the user equipment originally configured to perform ANR logging, it is operable to forward the log results to all RNCs that need to be informed via an IUR interface. If, for whatever reason, there is no IUR interface between the RNC and the source RNC, then the relevant logging information can be sent via OAM. However, in a small cell deployment environment, there is no interface necessarily defined between a macro RNC and an initiating femto cell. Furthermore, it is quite likely that a mobile network operator will have different OAM systems for macro cells and small cell deployments, since they typically use different management protocols. Thus, for a small cell triggered ANR log, a macro RNC may have no way to provide that log to the triggering small cell. The first aspect recognises that by ensuring the user equipment which has requested to perform logging of wireless access nodes from which a signal is detected is also operable to transmit the results of that logging to a predetermined wireless access network node, it is possible to ensure that the results of logging are reported back to a part of the network which can ensure the results of logging can be used in a manner which can be of use to the overall operation of the network.

In one embodiment, the predetermined wireless access network node comprises a small cell wireless access network node.

Accordingly, it will be appreciated that when the region around a small cell is of interest, a neighbour logging relationship comprising results determined by discovery of wireless access network nodes may be of use to a particular small cell of interest. It will be appreciated that when, for example, a small cell triggers an ANR log to occur on user equipment it is likely to be interested in finding neighbouring cells in its immediate vicinity. It will be appreciated that in some embodiments, the triggering network node and the predetermined wireless access network node to which the results are to be transmitted, may be the same network node.

In one embodiment, the method further comprises: checking whether communication is occurring with the predetermined wireless access network node prior to transmitting the results, thereby preventing transmission of the results to any other wireless access network node.

When small cell ANR logging is triggered by user equipment the ANR log of primary interest will be such that it finds neighbouring cells in the immediate vicinity of the small cells of interest. Re-use of a macro cell ANR mechanism can result in user equipment performing measurements for a long period of time and, as that user equipment roams through the network, it typically logs cells reasonably distant from a triggering small cell. As a result, a user equipment performing such logging may report information irrelevant to the small cell of interest and add unnecessary load to the network as it attempts to route the collated ANR logs to the wireless access network nodes of interest.

It will be appreciated that the coverage provided by small cells is likely to be particularly spotty and transient in comparison to the continuous coverage provided by macro cells and, thus, re-use of a simple ANR macro cell logging mechanism may prove inefficient and waste user equipment battery power. By preventing transmission of logging results to any other wireless access network node and ensuring that the results are transmitted to a predetermined wireless access network node, it is possible to require that a user equipment is operable to only report a requested ANR log back to a triggering small cell, rather than to any node it subsequently attaches to. Thus, when user equipment receives an indication to perform automatic neighbour relation logging from a specific small cell, it may, in some embodiments, be operable to remember the identity of the triggering small cell and, once logging is complete, only send it to the network when reattaching to that specific small cell. If the small cell is a closed cell, it is likely that it is a small cell frequently visited by any user equipment upon which ANR logging is likely to occur (for example, it may be a home small cell). By implementing additional logic at user equipment to restrict the node to which a user equipment delivers an ANR report, there is no need to route an ANR log within the network and the log is provided directly to the small cell of interest by the user equipment itself.

In one embodiment, the instruction to log wireless access nodes from which a signal is detected comprises an indication that the logging is to be performed according to a small cell logging regime.

Accordingly, by providing an explicit indication to user equipment that it is being requested to perform ANR logging for small cell deployments, it is possible to allow the user equipment to specifically employ additional wireless access network node discovery techniques to ensure that small cell ANR logging is efficient and does not unnecessarily drain battery resource.

In one embodiment, the method comprises: performing and storing results of the logging for a predetermined time period. Accordingly, a timer may be started by user equipment after it is requested to perform automatic neighbour relation logging. In a macro network ANR logging regime, the macro cell network nodes typically provide continuous coverage and a long predetermined period may be implemented such that a great deal of information can be recovered as user equipment roams within the large network. However, for the spotty and small-scale coverage typical of small cell network deployments, a timer with a relatively short duration (for example, of the order of 10 minutes) may be sufficient, assuming user equipment is located within the small cell deployment at the time of commencing wireless access network node discovery, to collect and collate sufficient ANR data to be useful in controlling overall network operation. Thus, once user equipment has recognized that it is to perform logging according to a small cell logging regime, it may reduce the predetermined time period for which a logging process is carried out, compared to that implemented in a macro cell ANR logging procedure.

In one embodiment, the method comprises: determining proximity to the predetermined wireless access network node to which results are to be transmitted; and performing the logging when in proximity of the predetermined wireless access network node.

There are currently known techniques for user equipment to determine whether it is within the proximity of a small cell and, in particular, a femto cell. As a result, those additional techniques can be used by the user equipment to ensure that it is operable to perform or commence ANR logging when a proximity indication is triggered, rather than performing logging as soon as it reverts to an idle, cell_PCH or URA_PCH state, as in a macro cell ANR logging procedure. Thus, the information collated by user equipment roaming through a small cell deployment may be most pertinent to the area in which it was wished to collect neighbour relation data at the time of instructing discovery of wireless access network nodes. The user equipment may, in some embodiments, be operable to determine proximity to the predetermined network node to which results are to be sent or may be operable to determine proximity to a different predetermined network node to the predetermined network node to which results are to be sent before commencing discovery and logging.

In one embodiment, the predetermined time period commences upon determination of proximity to the predetermined wireless access network node to which results are to be transmitted.

Accordingly, the method may allow user equipment a chance to move into the proximity of a small cell deployment before a timer commencing ANR logging is initiated.

In one embodiment, the method comprises: performing and storing results of the logging of wireless access nodes from which a signal is detected whilst within a region of radio coverage supported by the predetermined wireless access network node to which results of the logging are to be transmitted. If the user equipment roams outside the coverage of the small cell, it can determine that any subsequent cells from which it measures a signal are unlikely to be pertinent to the small cell of interest. By definition, if the user equipment is not in the coverage of the predetermined network node of interest, any other cell it detects would not be considered to be a neighbour to that cell of interest for the purposes of performing handover measurements.

According to some embodiments, if user equipment is instructed to perform node logging for cells whilst it is camped on a different cell, the user equipment may be operable not to perform any measurements until it is within the coverage area of the predetermined wireless access network node of interest.

In some embodiments, the predetermined wireless access network node of interest and the triggering predetermined wireless access network node are identical or the same.

A second aspect provides a computer program product operable, when executed on a computer, to perform the method of the first aspect.

A third aspect provides user equipment operable to discover wireless access network nodes in a region of a wireless communications network, the user equipment comprising:
reception logic operable to receive an instruction to log wireless access nodes from which a signal is detected and an indication of a predetermined wireless access network node to which results of the logging are to be transmitted;
logging logic operable to perform the logging and store results of the logging of wireless access nodes from which a signal is detected; and
transmission logic operable to transmit the results to the predetermined wireless access network node.

In one embodiment, the predetermined wireless access network node comprises a small cell wireless access network node.

In one embodiment, the user equipment further comprises: communication logic operable to check whether communication is occurring with the predetermined wireless access network node prior to transmitting the results, thereby preventing transmission of the results to any other wireless access network node.

In one embodiment, the instruction to log wireless access nodes from which a signal is detected comprises an indication that the logging is to be performed according to a small cell logging regime. In one embodiment, the user equipment comprises small cell logging logic operable to perform automatic neighbour relation logging according to a small cell logging regime.

In one embodiment, the user equipment further comprises small cell logging timing logic operable to perform and store results of the logging for a predetermined time period.

In one embodiment, the user equipment comprises: proximity logic operable to determine proximity to the predetermined wireless access network node to which results are to be transmitted and to perform the logging when in proximity of the predetermined wireless access network node.

In one embodiment, the predetermined time period commences upon determination of proximity to the predetermined wireless access network node to which results are to be transmitted.

In one embodiment, the user equipment comprises coverage logic operable to perform and store results of the logging of wireless access nodes from which a signal is detected whilst said user equipment is within a region of radio coverage supported by the predetermined wireless access network node to which results of the logging are to be transmitted.

A fourth aspect provides a method of initiating discovery, by user equipment, of wireless access network nodes in a region of a wireless communications network, comprising:
transmitting an instruction to log wireless access nodes from which a signal is detected including an indication of a predetermined wireless access network node to which results of the logging are to be transmitted.

Accordingly, the fourth aspect recognises that by transmitting an indication of a predetermined wireless access network node to which results of the logging are to be transmitted, it is possible to ensure that the results of the logging procedure may be successfully received and utilised, thereby aiding efficiency of overall network operation.

In one embodiment, the instruction further comprises an indication that the logging is to be performed according to a small cell logging regime.

It will be appreciated that small cell deployments require logging of a different kind to those employed in macro cell logging environments, and by informing user equipment that they are being instructed to perform logging according to a small cell logging regime it is possible to ensure most efficient neighbour relation data collection.

In one embodiment, the method comprises: determining whether user equipment is a member of a closed group of user equipment supported by the predetermined wireless access network node to which results of the logging are to be transmitted, and only transmitting the instruction to user equipment determined to be a member of the closed group.

If a small cell deployment is a hybrid cell, the small cell can implement logic such that it only requests detected set or missing neighbour logging from user equipment which are members of the hybrid cell. Such user equipment are likely to be frequent visitors to that hybrid cell and they will not typically have been defined as being members unless they are frequent users of that cell. Non-member user equipment are likely to be transient users and, hence, it does not make sense to use such user equipment to provide neighbour logging since they may not return or may only return after a significant period of time, at which point the data collected may be of little or no relevance.

A fifth aspect provides a computer program product operable, when executed on a computer, to perform the method of the fourth aspect.

A sixth aspect provides a wireless access network node operable to initiate discovery, by user equipment, of wireless access network nodes in a region of a wireless communications network, the wireless access network node comprising:
transmission logic operable to transmit an instruction to user equipment to log wireless access nodes from which a signal is detected, the instruction including an indication of a predetermined wireless access network node to which results of the logging are to be transmitted.

In one embodiment, the instruction further comprises an indication that the logging is to be performed according to a small cell logging regime.

In one embodiment, the network node comprises determination logic operable to determine whether user equipment is a member of a closed group of user equipment supported by the predetermined wireless access network node to which results of the logging are to be transmitted, and only transmit the instruction to user equipment determined to be a member of the closed group.

It will be appreciated that embodiments described herein limit and restrict macro cell detected set or missing neighbour logging in a manner which makes logging more suitable for use in small cell deployments. By employing such limitations, the amount of battery power required by user equipment when performing neighbour logging can be reduced. Furthermore, the likelihood of useable data of use to overall operation of a small cell deployment is maximised by limiting the reporting characteristics of collected data.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings in which:
Figure 1 illustrates the main components of a telecommunications network according to one embodiment;
Figure 2 illustrates a general small cell deployment within one macro cell showing in Figure 1;
Figure 3 illustrates schematically an automatic neighbour relation logging method according to one embodiment; and
Figures 4a and 4b illustrate schematically an automatic neighbour relation logging method according to one embodiment.

### DESCRIPTION OF THE EMBODIMENTS

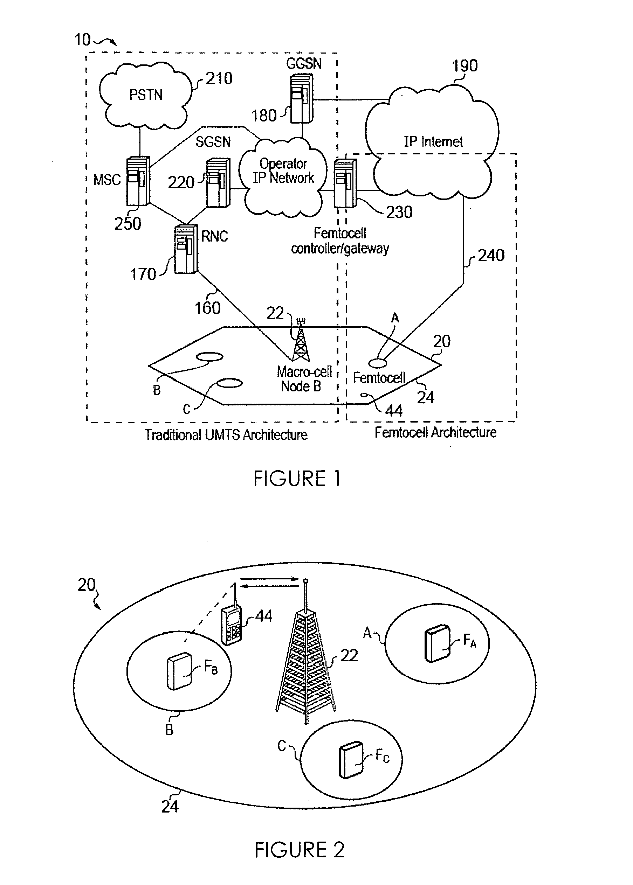

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication system 10 is managed by a radio network controller 170. The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with serving general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided femto cell base stations F_{A} to F_{C}, each of which provides a femto cell A to C in the vicinity of a building within which the associated femto cell base station is installed. The femto cells A to C provide local communications coverage for a user in the vicinity of those buildings. Each femto cell base station F_{A} to F_{C} communicates via a femtocell controller/gateway 230. A handover or camping event occurs between the base station 22 and the femto cell base stations F_{A} to F_{C} when the femto base stations F_{A} to F_{C} detect that user equipment comes within range. The femto cell base stations F_{A} to F_{C} typically utilise the user's broadband Internet connection 240 (such as ADSL, Cable, Ethernet, etc.) as a backhaul.

Femto cell base stations F_{A} to F_{C} are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations F_{A} to F_{C} are provided locally by customers. Such femto cell base stations F_{A} to F_{C} provide local coverage in areas of the macro network where quality of service may be low. Hence, the femto cell base stations F_{A} to F_{C} provide for improved quality of service in areas which are difficult for network operators. To reduce the cost of the femto base stations F_{A} to F_{C} and to reduce complexity and interference effects of the femto cell on other user equipment within the macro cell, the transmission power of the femto cell base station F_{A} to F_{C} is relatively low in order to restrict the size of the femto cell to a range of tens of metres or less. The femto cell base stations F_{A} to F_{C} have extensive auto-configuration and self-optimisation capability to enable a simply plug-and-play deployment. As such, they are designed to automatically integrate themselves into an existing macro cellular wireless network 10.

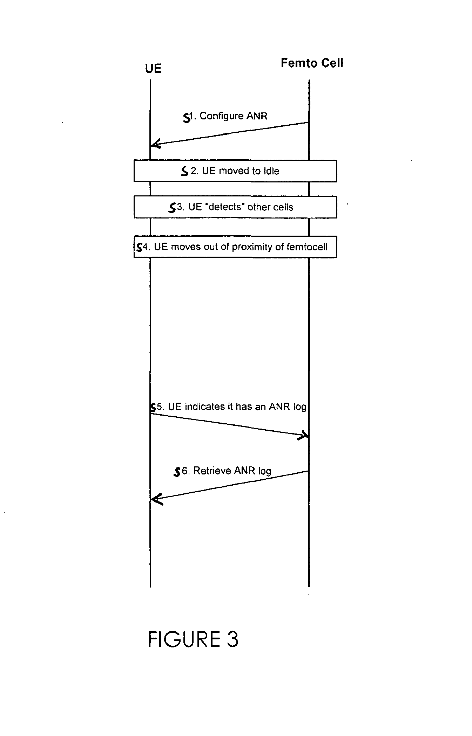

Figure 3 illustrates schematically an automatic neighbour relation logging method according to one embodiment.

In various small cell deployments, the intention is to provide continuous coverage to user equipment; for example within an office building. However, due to, for example, the presence of physical obstructions between small cell base stations, neighbouring base stations may not be detected during a sniffing process carried out by a first small cell base station and vice-versa. Accordingly, a small cell base station may be unaware from its own sniffing that a small cell base station can support a neighbouring small cell.

Use of automatic neighbour relation (ANR) features allows elements within a mobile network to automatically determine which cells are neighbouring to each other. Obtaining an up to date set of neighbour relations can be important to the overall operation of a communications network. Neighbour relations are used, for example, when configuring user equipment provided in a mobile network to measure the strength of signals received from potential handover targets. Furthermore, the network can use neighbour cell relations to determine how to configure measurements occurring at the user equipment.

Automatic neighbour relations can be obtained via various implementations. As described above, often a base station which supports the cell incorporates an ability to sniff for other cells configured in the vicinity. In such a case, a base station supporting a cell has the capability to measure a surrounding radio environment and thus determine the presence or otherwise of neighbouring cells via a sniffing function. Such an approach can be limited and there can be instances where neighbouring cells are unable to detect one another due to, for example, the presence of a physical barrier between base stations.

Other implementations allow a network to utilise mobile user equipment to provide neighbour cell information by making measurements of radio condition experienced in an environment. It will be appreciated that since user equipment roam through a network, use of user equipment may have more scope to detect "missing" neighbour relations. This can be particularly true when user equipment is at an edge of a cell's coverage area or, for example, user equipment is located in a building close to a window.

Use of an automatic neighbour relation mechanism involving user equipment measurements is known in a macro cell environment.

Small cells are low power, low cost, user deployed base stations that are able to provide exceptional cellular service in residential or enterprise environments. Such small cells have a typical coverage range of tens of metres and also have an extensive auto-configuration and self-optimisation capability, thus enabling simple plug-and-play deployment. Typically, small cells are designed to automatically integrate themselves into an existing macro cellular network.

Support of an automatic neighbour relation mechanism in a small cell (for example, femto cell) environment may prove more important than the corresponding ANR mechanism used in a macro cell environment. Femto and other small cells are typically deployed in an uncoordinated manner and thus, whilst a mobile operator may be able to configure a list of neighbours on any given small cell, such a list is likely to be inconsistent with reality. Even if a mobile operator was able to correctly configure a neighbour cell list on a particular small cell, an end user would typically be free to move a femto within an authorised location (for example, from one room to another), or turn any particular femto on and off. It will be appreciated that such actions can alter which cells then become neighbours of a small cell of interest.

In addition to using neighbour cell list to determine handover targets, a small cell will typically utilise automatic neighbour relation logs in order to configure its own primary scrambling code (PSC) or physical cell ID (PCI). Automatically configuring a small cell PSC or PCI is a particularly important feature in overall operation of a small cell and thus the more information that a small cell has regarding its neighbouring cells the better it can resolve which PSC or PCI it should use to avoid clashes with neighbours.

Support of automatic neighbour relation methods in relation to small cells is important to allow the provision of a "normal" mobile network service to an end user. Mechanisms used in macro cells for allowing user equipment to perform ANR logging are not suitable for small cell deployments and suffer from a number of drawbacks.

In a UMTS macro cell environment, an agreed ANR mechanism relies on an RNC configuring ANR logging on user equipment attached to a cell controlled by that RNC. If instructed to ANR log by an RNC, user equipment is operable, once it returns to an idle cell_PCH or URA_PCH state, to begin ANR logging. Such user equipment configured to perform ANR logging then roams within the network and logs system information broadcast by cells it detects. That logging process continues until it reaches a maximum number of cells to be logged or until a timer (typically 48 hours) expires. Once the logging process is complete, the user equipment provides the determined ANR log to the next RNC to which it attaches. This may, of course, be a different RNC to that which initiated the ANR measurements. The collated logged information is then sent back to the RNC which requested that the user equipment perform the logging function.

In some circumstances (for example, when user equipment has roamed significantly through a network), user equipment will have logged information from cells supported by a plurality of RNCs and the logs recorded will then be sent to each of those RNCs.

The RNC which receives the ANR log from user equipment is operable to forward the logs captured by all those RNCs which need to be informed via an IUR interface. If there is no direct interface between those RNCs of interest, the information is communicated within the network via OAM.

It will be appreciated that in a small cell environment, use of macro cell logging may lead to problems. If, for example, a small cell configures ANR logging to occur on user equipment and that log is subsequently reported to a macro RNC, there may be no well-defined interface between a macro RNC and the initiating small cell base station. That is to say, there may be no direct means of communication between an RNC to which the logging results are reported and the small cell which initiated or requested logging in the first place. It is likely that a mobile network operator will have different OAM systems for macro cells and femto cells since they use different management protocols and thus for a small cell triggered automatic neighbour relation log a macro RNC may simply have no way to provide that collected log to the originating triggering small cell.

Furthermore, if a small cell triggers an automatic neighbour relation logging process to occur at user equipment it is typically only interested in finding neighbouring cells in its own immediate vicinity. Re-use of the existing macro cell mechanism which may occur for up to 48 hours may result in user equipment performing measurements for a long period of time as it roams through the network, thereby logging cells reasonably distant from the triggering small cell. As a result, user equipment performing ANR logging according to a macro cell implementation may import information irrelevant to the initiating small cell and may place an unnecessary load on the mobile network, as attempts are made to then send the resulting logs to relevant nodes.

The nature of femto and other small cell deployments is such that the coverage is "spotty". The small cells may only be switched on or active for some periods of time and may frequently be moved. Thus, a femto cell can be missing from a neighbour cell list of a macro cell. It will be appreciated that using known ANR logging methods, a macro cell expecting a femto or other small cell to be in a particular geographical location may configure user equipment to look for those missing neighbour relations and, in particular, for missing small cells. Because small cells including femto cells, especially closed access ones, are typically placed inside a building, the coverage provided by a small cell network will be particularly spotty compared to the continuous coverage provided by a macro cell network. User equipment configured to perform ANR for macro cells can continuously look for macro cells, since a macro cell will typically provide continuous and extensive coverage. Simply performing macro cell ANR methods in relation to small cell and femto cell networks may be particularly inefficient, since continuous measurement and searches for small cells may inevitably be fruitless and waste user equipment battery power.

Embodiments described implement new ANR logic, both in a small cell and on user equipment. Furthermore, embodiments may require a network to be operable to provide an indication to user equipment that it is to perform ANR logging for femto cells or small cells rather than typical macro cell ANR logging. One example of such an indication in, for example, UMTS, would be the introduction of an additional information element in an RRC message. That additional information element may indicate to user equipment a particular logging measurement configuration. In embodiments, such a configuration may provide an explicit indication to user equipment that when performing automatic neighbour relation logging it is being requested to perform ANR logging for a small cell deployment. Use of such an indication may allow user equipment, according to some embodiments, to employ additional techniques and methodology particularly relevant to small cell ANR logging.

In some embodiments, additional techniques utilised by user equipment in small cell ANR logging may include an instruction to only report a complete ANR log back to a source small cell base station. That is to say, the user equipment may only pass up an ANR log when it next connects to the small cell which requested ANR logging occur initially and configured the user equipment to carry out that ANR logging. This differs from a macro cell logging ANR logging technique in that in ANR macro cell logging a complete log is sent up to any network node to which user equipment, having completed an ANR log, subsequently attaches itself to. In some embodiments, when user equipment receives an indication to perform ANR from a specific small cell base station, it is operable to remember the identity of the triggering small cell base station and, when it has completed its ANR logging, the user equipment is operable to send that complete log to the network only if it is reattaching itself to the specific small cell base station which initiated the ANR logging process.

It will be appreciated that if a small cell deployment is a closed deployment it is likely that an initiating small cell base station will be frequently visited by any given user equipment on which logging is initiated; for example, it may be that a user equipment home small cell base station initiates an ANR logging process. By definition, closed cell deployments are closed to the majority of user equipment and, hence, those user equipment which can access that given small cell deployment will most likely be frequent users of that deployment.

In some embodiments, additional parameters and restrictions in relation to user equipment performing ANR logging are implemented and the ANR instruction is operable to restrict a node to which given user equipment delivers an ANR log report. It will be appreciated that according to such an embodiment, there is no longer any need for another femto cell, small cell deployment, RNC or femto gateway provided within a macro network to route a requested ANR log back to a triggering small cell base station. Instead, a complete ANR log is provided directly by the user equipment itself to the requesting base station.

According to some embodiments, the small cell deployment may be a hybrid cell. Accordingly, a small cell base station within that deployment may be operable to include logic restrictions such that it is operable to request ANR logging from user equipment which are members of that hybrid cell deployment. An advantage of such implementations is that such user equipment are likely to be frequent visitors to the small cell deployment of interest. It will be appreciated that user equipment determined to be a "member" will only be such if they are frequent users of the small cell deployment. Non-member user equipment may be transient users and, thus, use of those transient users to perform ANR logging may be inefficient since those transient users may not return or may return only after a significant period of time.

In some embodiments, user equipment may be operable to implement a logging solution in which the logging performed by the user equipment is in some ways "limited". User equipment may be operable to only perform ANR measurements whilst it is still camped on at the triggering small cell base station. According to such an embodiment, if the user equipment roams outside a coverage area provided by the small cell base station which triggered ANR logging, the user equipment may be operable to determine that subsequent cells measured are unlikely to be pertinent to the triggering small cell base station. It will be understood that, by definition, if user equipment is not within the coverage area of the triggering small cell base station, any further cells it detects may not be considered to be a neighbour to the initiating small cell; for example, for the purposes of performing handover measurements.

In further embodiments, user equipment may be instructed to perform small cell ANR logging by a macro cell. That is to say, a small cell ANR logging request may be initiated by a macro RNC. In such an instance, logic may be available at user equipment and the instruction to perform ANR logging may include an instruction to the user equipment not to perform any ANR measurements until it is within the proximity of a small cell of interest.

There are currently known techniques according to which a user equipment is operable to determine when it is within the proximity of a particular small cell; for example, a femto cell. It will thus be appreciated that the additional logic required at the user equipment need only ensure that it is operable to perform ANR logging when a proximity indication is triggered at the user equipment, rather than being operable to perform ANR logging as soon as it drops into idle mode, as would be the case in a usual macro cell ANR logging solution.

In known macro cell ANR logging methods, a timer is typically started by user equipment operable to perform ANR logging after the network has initiated and configured the user equipment to perform ANR logging. The duration of the timer set by the user equipment typically ranges from 10 minutes to one hour, since it is used for macro network ANR logging and such networks typically have continuous coverage. It will, however, be appreciated that for the spotty coverage typical of small cell network deployments, a timer with a short duration initiated by a macro network may not be suitable and user equipment performing ANR can be operable to start an ANR logging process once in the region of network of interest. A short logging period, coupled with a proximity requirement of other described embodiments, can be implemented. Simply setting a very short logging period at user equipment when ANR logging is instructed may result in that timer expiring before the user equipment moves into proximity of a target small cell. Thus, it will be appreciated that use of a separate timer may be necessary when a user equipment is configured to perform ANR for small cell deployments. The separate timer may be operable to ensure that an ANR logging process request remains pending at the user equipment until it moves into a particular location, and then a further timer may be used to ensure that the ANR logging process begins and then continues for a period within which the user equipment roams within the geographic region of interest at the initiation of the ANR logging request. It will be appreciated that the pending ANR request timer may be such that it is long, thereby giving user equipment an opportunity to move into proximity of a small cell and commence ANR logging.

In alternative embodiments, an existing timer utilised by user equipment in macro cell ANR logging can be used, but the user equipment may only start the timer when it is within proximity of a femto cell. Such embodiments do not preclude use of a specific new timer for small cell ANR logging.

Limiting the duration of ANR logging for small cell deployments may have the additional advantage that it limits the battery power requirements of user equipment performing an ANR logging process. A macro cell ANR logging process demands that user equipment performs ANR logging for a continuous period of time and that period of time may be particularly long and thus use up a significant battery resource. By utilising a mechanism which allows user equipment to determine whether and when it should perform ANR small cell logging, it is possible to help to avoid unnecessary battery power resource use.

Figure 3 illustrates schematically an embodiment of a small cell ANR logging methodology according to one embodiment. In the example illustrated by Figure 3, a femto cell is operable to configure user equipment to perform automatic neighbour relation logging. According to the embodiment described, the ANR logging is adapted to suit a small cell deployment, thereby mitigating drawbacks associated with direct implementation of a macro cell ANR logging technique.

At step S1 illustrated in Figure 3, a femto cell base station is operable to configure user equipment to perform automatic neighbour relation logging. It does so by sending a message to user equipment instructing initiation of ANR logging. In an RRC configuration message sent from the femto base station to user equipment, it is indicated to the user equipment that the ANR configuration to be implemented is for small cell ANR logging. It is also indicated to user equipment that the results of the ANR logging process are to be reported back to the initiating femto cell base station.

At step S2 illustrated in Figure 3, the user equipment moves to an idle, cell_PCH or URA_PCH state. That is to say, a typical state where user equipment is operable to perform ANR logging.

At step S3, the user equipment is operable to autonomously detect missing cells and operates to monitor for signals received from cells and log those cells from which a signal is received. In this respect, the user equipment can log "missing" cells which are not already in a neighbour cell list of the femto cell which initiated ANR logging. The user equipment is operable to perform ANR logging whilst the configuration set in the RRC configuration message at step S1 is valid. For example, the user equipment may only be operable to perform ANR logging whilst a duration timer remains active and has not expired.

At step S4, the user equipment moves out of the proximity of the femto cell, detects that it has left the proximity of the femto cell, and is operable in some embodiments, to stop logging. At some point later, the user equipment may return to the coverage area of the femto cell which initially triggered the ANR log request and connects to that femto cell. As shown at step S5, the user equipment indicates to that femto cell that it has an ANR log to report. At step S6, the log is then retrieved from the user equipment using a standard user equipment information request and response RRC procedure.

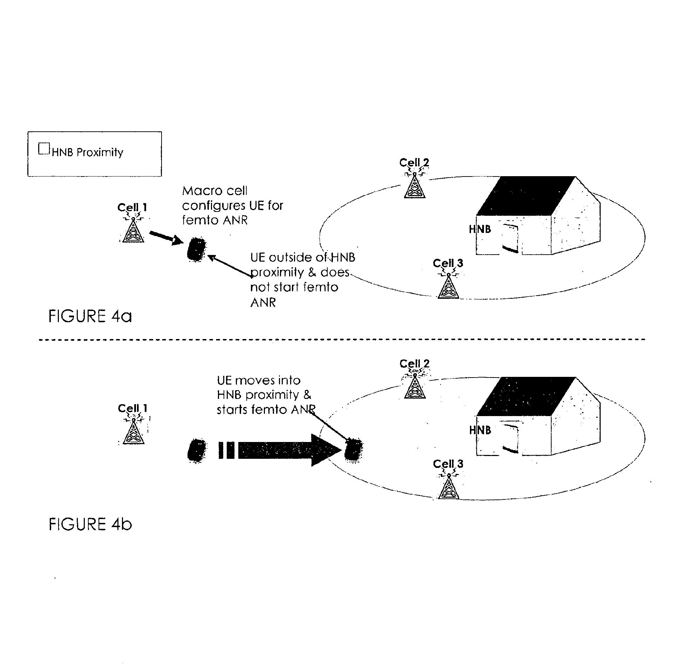

Figures 4a and 4b illustrate schematically a further embodiment of an ANR logging method. According to the embodiment shown in Figures 4a and 4b, a macro RNC is operable to configure user equipment to perform small cell ANR logging. According to the embodiment shown in Figures 4a and 4b, the user equipment does not initiate ANR logging until it detects that it is within a predetermined proximity of a femto cell. According to the embodiments shown in Figures 4a and 4b, a first step in the method is that a macro RNC configures user equipment to perform small cell ANR logging. An RRC configuration message is sent by a macro base station to user equipment which indicates to that user equipment that the ANR logging is to be carried out in accordance with small cell logging procedures. The RNC indicates a small cell base station to which results are to be reported. In this case, a home base station (HNB). According to a second step, user equipment moves into an idle, cell_PCH or URA_PCH state. That is to say, an appropriate state where user equipment is operable to perform ANR logging.

As shown in Figure 4b, user equipment then roams towards a target femto cell and detects when it is in the proximity of that femto cell. Once in the proximity of that femto cell, user equipment is operable to initiate ANR logging and complete ANR logging whilst in the proximity of the home base state. Once the ANR logging procedure is complete, the user equipment indicates to the HNB (home base station) that it has an ANR log to report. The log is then retrieved from the user equipment using a typical user equipment information request and response RRC procedure. On configuring the user equipment to perform small cell automatic neighbour relation logging, the macro cell includes in its instruction to user equipment an indication of the femto cell which is to receive the results of the ANR logging procedure and only if the user equipment detects that it is in communication with the necessary target small cell will it indicate to that cell that it has an ANR log to report.

Embodiments provide a solution for automatic neighbour relation discovery using user equipment in a small cell deployment.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of discovering wireless access network nodes in a region of a wireless communications network, comprising:
receiving an instruction to log wireless access nodes from which a signal is detected;
receiving an indication of a predetermined wireless access network node to which results of said logging are to be transmitted;
performing said logging and storing results of said logging of wireless access nodes from which a signal is detected; and
transmitting said results to said predetermined wireless access network node.

2. A method according to claim 1, wherein said predetermined wireless access network node comprises a small cell wireless access network node.

3. A method according to claim 1 or claim 2, further comprising:
checking whether communication is occurring with said predetermined wireless access network node prior to transmitting said results, thereby preventing transmission of said results to any other wireless access network node.

4. A method according to any preceding claim, wherein said instruction to log wireless access nodes from which a signal is detected comprises an indication that said logging is to be performed according to a small cell logging regime.

5. A method according to claim 4, comprising:
performing and storing results of said logging for a predetermined time period.

6. A method according to claim 4 or claim 5, comprising:
determining proximity to said predetermined wireless access network node to which results are to be transmitted; and
performing said logging when in proximity of said wireless access network node.

7. A method according to claim 6, wherein said predetermined time period commences upon determination of proximity to said predetermined wireless access network node to which results are to be transmitted.

8. A method according to any preceding claim, comprising performing and storing results of said logging of wireless access nodes from which a signal is detected whilst within a region of radio coverage supported by said predetermined wireless access network node to which results of said logging are to be transmitted.

9. A computer program product operable, when executed on a computer, to perform the method of any one of claims 1 to 8.

10. User equipment operable to discover wireless access network nodes in a region of a wireless communications network, said user equipment comprising:
reception logic operable to receive an instruction to log wireless access nodes from which a signal is detected and an indication of a predetermined wireless access network node to which results of said logging are to be transmitted;
logging logic operable to perform said logging and store results of said logging of wireless access nodes from which a signal is detected; and
transmission logic operable to transmit said results to said predetermined wireless access network node.

11. A method of initiating discovery, by user equipment, of wireless access network nodes in a region of a wireless communications network, comprising:
transmitting an instruction to log wireless access nodes from which a signal is detected including an indication of a predetermined wireless access network node to which results of said logging are to be transmitted.

12. A method according to claim 11, wherein said instruction further comprises an indication that said logging is to be performed according to a small cell logging regime.

13. A method according to claim 11 or claim 12, comprising determining whether user equipment is a member of a closed group of user equipment supported by said predetermined wireless access network node to which results of said logging are to be transmitted, and only transmitting said instruction to user equipment determined to be a member of said closed group.

14. A computer program product operable, when executed on a computer, to perform the method of any one of claims 11 to 13.

15. A wireless access network node operable to initiate discovery, by user equipment, of wireless access network nodes in a region of a wireless communications network, said wireless access network node comprising:
transmission logic operable to transmit an instruction to user equipment to log wireless access nodes from which a signal is detected, said instruction including an indication of a predetermined wireless access network node to which results of said logging are to be transmitted.

## Amended claims

### Amended claims in accordance with Rule 137(2) EPC.

**1.** A method of discovering wireless access network nodes in a region of a wireless communications network (10), comprising:
receiving (S1) an instruction to log wireless access nodes from which a signal is detected;
receiving an indication of a predetermined small cell wireless access network node to which results of said logging are to be transmitted;
performing (S3) said logging and storing results of said logging of wireless access nodes from which a signal is detected; and
transmitting (S5) said results to said predetermined small cell wireless access network node; and checking whether communication is occurring with said predetermined small cell wireless access network node prior to transmitting said results, thereby preventing transmission of said results to any other wireless access network node.

**2.** A method according to any preceding claim, wherein said instruction to log wireless access nodes from which a signal is detected comprises an indication that said logging is to be performed according to a small cell logging regime.

**3.** A method according to claim 2, comprising:
performing and storing results of said logging for a predetermined time period.

**4.** A method according to claim 2 or claim 3, comprising:
determining proximity to said predetermined small cell wireless access network node to which results are to be transmitted; and
performing said logging when in proximity of said small cell wireless access network node.

**5.** A method according to claim 4, wherein said predetermined time period commences upon determination of proximity to said predetermined wireless access network node to which results are to be transmitted.

**6.** A method according to any preceding claim, comprising performing and storing results of said logging of wireless access nodes from which a signal is detected whilst within a region of radio coverage supported by said predetermined small cell wireless access network node to which results of said logging are to be transmitted.

**7.** A computer program product operable, when executed on a computer, to perform the method of any one of claims 1 to 6.

**8.** User equipment (44) operable to discover wireless access network nodes in a region of a wireless communications network (10), said user equipment (44) comprising:
reception logic operable to receive an instruction to log wireless access nodes from which a signal is detected and an indication of a predetermined small cell wireless access network node to which results of said logging are to be transmitted;
logging logic operable to perform said logging and store results of said logging of wireless access nodes from which a signal is detected; and
transmission logic operable to transmit said results to said predetermined small cell wireless access network node; said transmission logic being operable to check whether communication is occurring with said predetermined small cell wireless access network node prior to transmission of said results, thereby preventing transmission of said results to any other wireless access network node.
